# FASCICULE DE BREVET EUROPEEN

(11) **EP 3 600 646 B1**
(45) Date de publication et mention de la délivrance du brevet: **14.07.2021**
(21) Numéro de dépôt: 18719054.1
(22) Date de dépôt: 22.03.2018
(51) Int. Cl.: B01J 19/26, B05B 1/26, B05B 7/00, B01J 4/00

(54) **DISPOSITIF D'INJECTION DE CHARGE D'UNE UNITE FCC A PERTE DE CHARGE LIMITEE**
FCC-EINHEITSLADUNGSINJEKTIONSVORRICHTUNG MIT BEGRENZTEM DRUCKABFALL
FCC UNIT CHARGE INJECTION DEVICE WITH LIMITED PRESSURE DROP

(30) Priorité: 24.03.2017 FR 1752496
(43) Date de publication de la demande: 05.02.2020
(73) Titulaire: Total Raffinage Chimie, 92400 Courbevoie (FR)
(72) Inventeur: LESAGE, Romain, 2000 Antwerpen (BE); DECKER, Sébastien, 76930 Octeville sur Mer (FR); RABOIN, Jean-Christophe, 41600 Chaumont Sur Tharonne (FR); KERNEUR, Youen, 76620 Le Havre (FR)
(74) Mandataire: Kerneur, Youen
(86) Numéro de dépôt international: PCT/EP2018/057340
(87) Numéro de publication internationale: WO 2018/172473

(56) Documents cités:
- WO-A1-01/14500
- WO-A1-2015/073133
- WO-A1-2015/170034
- WO-A1-2017/021977
- PRASHANTA DUTTA ET AL: "Effect of baffle size, perforation, and orientation on internal heat transfer enhancement", INTERNATIONAL JOURNAL OF HEAT AND MASS TRANSFER., vol. 41, no. 19, 1 octobre 1998 (1998-10-01), pages 3005-3013, XP055479452, GB ISSN: 0017-9310, DOI: 10.1016/S0017-9310(98)00016-7

## Description

La présente invention se rapporte à un dispositif d'injection, notamment un dispositif d'injection de charge d'hydrocarbures d'une unité de raffinage, en particulier une unité de craquage catalytique fluide (FCC « Fluid Catalytic Cracking » en anglais).

Les charges d'hydrocarbures liquides traitées dans les unités de raffinage sont généralement mises en contact avec un catalyseur solide qui va favoriser la ou les réactions chimiques de traitement de la charge. Afin d'améliorer ce contact et de maximiser le rendement des réactions, ces charges d'hydrocarbures liquides sont atomisées en fines gouttelettes par des dispositifs d'injection. Cette d'atomisation permet de maximiser la surface de contact liquide (charge d'hydrocarbures liquide) -solide (catalyseur), ce qui favorise le transfert de chaleur et donc la vaporisation de ces hydrocarbures qui réagissent alors en phase gazeuse au contact du solide (catalyseur). Bien qu'il n'existe pas de réel consensus concernant le diamètre optimum des gouttelettes, on recherche en général à former des gouttelettes dont le diamètre est du même ordre de grandeur que le diamètre des particules de catalyseur, à savoir moins de 200 microns, par exemple de l'ordre de 50 à 80 microns.

De manière générale, on utilise des dispositifs d'injection dits « diphasiques », lesquels présentent un corps creux globalement cylindrique et deux ouvertures d'entrée par lesquelles on injecte respectivement la charge d'hydrocarbures liquide et un gaz d'atomisation, généralement de la vapeur d'eau, à l'intérieur du corps. Une chambre de contact est ménagée à l'intérieur du corps, dans laquelle on met en contact la charge d'hydrocarbures et le gaz d'atomisation pour atomiser la charge d'hydrocarbures. Une fois atomisée, la charge d'hydrocarbures est éjectée via une ouverture de sortie débouchant à l'intérieur du réacteur. Chaque dispositif d'injection est implanté sur une paroi de réacteur de manière à ce qu'une extrémité du dispositif d'injection comprenant l'ouverture de sortie soit située à l'intérieur du réacteur.

On connait des dispositifs d'injection à impact dans lesquels la charge est introduite radialement dans le corps et impacte une cible située au centre du corps, engendrant la formation de gouttelettes. Un gaz d'atomisation circulant axialement permet d'entrainer ces gouttelettes en les divisant davantage vers la sortie du corps. Le document WO2015/073133A1 propose notamment un dispositif d'injection à impact dans lequel un anneau de dispersion est placé à l'intérieur du corps cylindrique du dispositif, à la sortie de la chambre de contact. Cet anneau de dispersion s'étend sur toute la périphérie interne du corps et redirige une partie du flux axial périphérique de gaz et gouttelettes vers l'intérieur du corps, ce qui facilite leur mélange lors de leur déplacement jusqu'à la sortie du dispositif. La réduction du diamètre interne du corps du fait de la présence de cet anneau engendre néanmoins une perte de charge qui peut s'avérer problématique pour le traitement de charges lourdes, de plus en plus utilisées. En effet, l'atomisation de charges lourdes, de part les propriétés physiques de celles-ci (viscosité, densité notamment), nécessite une perte de charge importante au niveau des injecteurs afin de générer de fines gouttelettes, ce qui a pour conséquence d'augmenter la pression de la charge alimentant les injecteurs. Il faut alors utiliser des pompes puissantes et coûteuses pour atteindre les pressions souhaitées en sortie d'injecteur. Selon les configurations des dispositifs d'injection diphasiques, il peut en outre s'avérer nécessaire d'augmenter de manière considérable le débit de gaz d'atomisation pour atomiser des charges lourdes.

Toutefois, injecter des quantités plus importantes de gaz d'atomisation augmente le coût global du traitement et peut en outre avoir un impact négatif sur le rendement des réactions en induisant des réactions parallèles non souhaitées, notamment lorsque le gaz d'atomisation est de la vapeur d'eau. C'est ainsi le cas lorsque de grandes quantités de vapeur d'eau sont injectées dans les réacteurs FCC. Il est donc préférable de ne pas augmenter le débit de gaz d'atomisation. En outre, l'injection de grandes quantités de vapeur d'eau nécessite un surdimensionnement des unités de séparation des effluents en aval de l'unité FCC, notamment pour condenser la vapeur d'eau, ce qui accroit les coûts de fabrication. Par ailleurs, travailler à plus basse pression permet de diminuer les épaisseurs de métal lors de la fabrication des trains de préchauffe de la charge en amont du système d'injection de charge, donc de réduire les coûts de fabrication.

WO 2017/021977 présente un dispositif d'injection conformé pour atomiser un liquide comprenant une chicane sous la forme d'un "impingement wall".

WO 01/14500 présente un injecteur d'atomisation comprenant une chicane sous la forme d'une barre transversale qui ne s'étend que sur une partie seulement de la périphérie de la paroi interne.

Il existe donc un besoin pour des dispositifs d'injection qui ne provoquent qu'une faible chute de la pression d'injection, permettant leur utilisation avec des charges lourdes sans avoir à augmenter le débit de gaz d'atomisation, ni la puissance des pompes utilisées.

L'invention vise à pallier au moins en partie les inconvénients mentionnés ci-dessus. A cet effet, il est proposé un dispositif d'injection, selon les revendications, conformé pour atomiser un liquide en gouttelettes au moyen d'un gaz, comprenant un corps tubulaire creux s'étendant suivant une direction longitudinale et dont une paroi interne, notamment cylindrique, définit une première zone dite de contact et une deuxième zone située en aval de la première zone par rapport à un sens de circulation du liquide et du gaz à l'intérieur du corps, ce dernier présentant :
- au moins une première et une deuxième ouverture d'entrée débouchant dans ladite première zone, pour injecter respectivement un liquide et un gaz d'atomisation à l'intérieur de la première zone,
- au moins un orifice de sortie situé en aval des première et deuxième zones pour évacuer le liquide atomisé hors du corps.

Selon l'invention, la paroi interne du corps est pourvue, entre la première et la deuxième zone, d'au moins une chicane conformée de sorte que, dans chaque plan perpendiculaire à la direction longitudinale du corps contenant ladite chicane, celle-ci s'étend sur une partie seulement de la périphérie de la paroi interne.

De manière usuelle, une chicane est un dispositif qui contrarie le cheminement d'un fluide en mouvement. Ainsi, selon l'invention, dans chaque plan perpendiculaire à la direction longitudinale du corps, chaque chicane réduit la surface passante du corps uniquement sur une partie de sa périphérie de sorte que la perte de charge est inférieure à la perte de charge dans le cas où une chicane s'étend sur toute la périphérie de la paroi interne comme cela est attendu pour l'invention décrite dans WO2015/073133A1.

Par surface passante, on entend la surface interne au corps, non occupée par un élément et au travers de laquelle peut circuler le fluide.

Avantageusement, ladite au moins une chicane est conformée de sorte que le projeté orthogonal de la chicane sur un plan perpendiculaire à la direction longitudinale du corps s'étend sur une partie seulement de la périphérie de la paroi interne dans ledit plan de projection. Ceci permet de réduire davantage la perte de charge malgré la présence de chicane(s). A noter que lorsque plusieurs chicanes sont prévues, leurs projections dans un même plan orthogonal peuvent se recouvrir, voire s'étendre sur la totalité de la périphérie de la paroi interne.

En variante ou en combinaison, ladite au moins une chicane peut être conformée de sorte que le projeté orthogonal d'au moins une chicane sur un plan perpendiculaire à la direction longitudinale du corps peut s'étendre sur toute la périphérie de la paroi interne dans ledit plan de projection, éventuellement avec recouvrement.

Dans un mode de réalisation, ladite au moins une chicane peut s'étendre sur une longueur, suivant la direction longitudinale, au moins égale à une dimension interne maximale du corps mesurée perpendiculairement à la direction longitudinale. Cette chicane, appelée « chicane longue » par la suite, peut par exemple se présenter sous la forme d'une plaque épousant la paroi interne du corps à laquelle elle est solidarisée. Avantageusement, la chicane longue peut présenter un profil (en section longitudinale) irrégulier, notamment ondulé ou dentelé, suivant la direction longitudinale du corps. Cet agencement peut permettre d'améliorer la dispersion du flux en aval de la chicane. Pour des raisons d'encombrement, lorsque plusieurs chicanes longues sont prévues, il s'agit de préférence de chicanes espacées angulairement les unes des autres et non de chicanes espacées longitudinalement tel que décrit plus bas.

Dans un mode de réalisation, ladite paroi interne peut être pourvue d'une pluralité de chicanes disjointes, notamment deux ou plus. Ceci permet de faciliter le mélange des fluides sans pour autant augmenter la perte de charge. Notamment, ces chicanes peuvent être réparties, en particulier régulièrement, sur la périphérie de la paroi interne pour un meilleur mélange sans augmentation de la perte de charge.

Les caractéristiques ci-après permettent également d'améliorer le mélange entre le liquide et le gaz sans augmenter de manière notable la perte de charge.

Ainsi, lorsque plusieurs chicanes sont présentes, chaque chicane peut avantageusement être espacée d'au moins une autre chicane suivant la direction longitudinale du corps.

Dans ce cas, les chicanes peuvent alors s'étendre sur une longueur du corps relativement réduite.

Lorsque plusieurs chicanes espacées sont présentes, chaque chicane peut en outre être décalée angulairement par rapport aux autres chicanes par rotation autour d'un axe parallèle à, ou confondu avec, ladite direction longitudinale. En particulier, le projeté orthogonal des chicanes sur un plan perpendiculaire à la direction longitudinale du corps peut s'étendre sur toute la périphérie de la paroi interne. Dans ce plan de projection, il peut y avoir recouvrement des projections des chicanes ou, de préférence, juxtaposition, les chicanes étant alors disposées en quinconce.

Indépendamment du nombre de chicanes et de leur disposition, la ou les chicanes peuvent présenter différentes formes.

Ladite au moins une chicane peut ainsi définir une paroi dont un bord est solidarisé à la paroi interne.

La paroi définie par ladite au moins une chicane peut présenter un bord libre distant de la paroi interne dentelé ou crénelé.

En variante ou en combinaison, la paroi de ladite au moins une chicane peut présenter des orifices la traversant de part en part, notamment suivant une direction parallèle ou sensiblement parallèle à la direction longitudinale du corps.

Ladite au moins une chicane peut définir une paroi dont un bord est solidarisé à la paroi interne le long d'une ligne s'étendant dans un plan perpendiculaire à la direction longitudinale dudit corps.

En variante, ladite au moins une chicane peut définir une paroi dont un bord est solidarisé à la paroi interne le long d'un segment d'une courbe, notamment d'une courbe hélicoïdale.

Dans tous les cas, la paroi définie par chaque chicane peut alors être une paroi plane, simple à réaliser, ou encore une paroi incurvée.

Ladite au moins une chicane peut ainsi présenter, du côté des ouvertures d'entrée, une face incurvée agencée pour diriger un fluide impactant cette face vers l'intérieur du corps, ce qui peut permettre d'améliorer le mélange. Une telle face incurvée peut être prévue également pour une chicane longue.

Notamment, plusieurs chicanes (y compris des chicanes longues) présentant une face incurvée peuvent être agencées les unes par rapport aux autres afin d'impartir au fluide impactant sur leur face incurvée un même mouvement de rotation autour d'un axe parallèle à la direction longitudinale du corps.

Quelle que soit sa forme (incurvée ou plane), une chicane (ou sa tangente en son point de jonction avec la paroi interne du corps) peut définir un angle prédéterminé par rapport à un plan orthogonal à la direction longitudinale du corps. Cet angle peut être variable pour une même chicane.

Quelle que soit la forme (incurvée ou plane) d'une chicane, son bord libre (opposé à son bord solidaire de la paroi interne du corps) peut présenter une ou deux faces de forme arrondie ou en biseau.

Plusieurs chicanes (non longues) adjacentes, notamment espacées longitudinalement, peuvent présenter des hauteurs, mesurées perpendiculairement à la direction longitudinale du corps, non nulles et différentes. Ceci peut permettre d'améliorer la dispersion du fluide.

Notamment, suivant la direction longitudinale du corps, les hauteurs de chicanes adjacentes peuvent alors être croissantes jusqu'à atteindre un maximum et à décroitre.

De manière générale, la ou les chicanes peuvent présenter une hauteur, mesurée perpendiculairement à la direction longitudinale du corps, non nulle. Avantageusement, cette hauteur est égale au plus à 1/2 de la dimension interne maximale du corps perpendiculairement à la direction longitudinale du corps. De préférence cette hauteur est égale au plus à 1/4 de la dimension interne maximale du corps, voire à 1/8^{ème} de cette dimension maximale, par exemple de l'ordre de 1/10^{ème} de cette dimension maximale. Cette hauteur peut en outre être variable pour une même chicane.

De manière générale, la ou les chicanes peuvent présenter une épaisseur, mesurée suivant la direction longitudinale du corps, non nulle. Avantageusement, cette épaisseur est d'au plus 35mm, de préférence d'au plus 31mm, voire d'au plus 20mm ou d'au plus 16mm. Cette épaisseur peut par exemple être de l'ordre de 10mm.

Le dispositif d'injection selon l'invention peut être de différents types.

Il peut notamment s'agir d'un dispositif d'injection comprenant une cible s'étendant perpendiculairement à la direction longitudinale du corps, en regard d'une unique ouverture d'entrée de liquide d'axe perpendiculaire à la direction longitudinale, ou encore d'un dispositif d'injection comprenant deux ouvertures d'entrée de liquide s'étendant perpendiculairement à la direction longitudinale du corps et situées en regard l'une de l'autre, voire plus de deux ouvertures dont les axes se coupent en un seul et même point sur une ligne axiale s'étendant à l'intérieur du corps suivant la direction longitudinale X, tel que décrit dans le document FR 3 020 578 A1.

L'invention est maintenant décrite en référence aux dessins annexés, non limitatifs, dans lesquels :
- la figure 1 illustre une représentation schématique en coupe longitudinale d'un dispositif d'injection selon un mode de réalisation de l'invention ;
- les figures la et lb sont des vues en coupe selon les lignes AA et BB respectivement de la figure 1 ;
- la figure 1c est une projection orthogonale dans un plan perpendiculaire à la direction longitudinale X des chicanes du dispositif d'injection de la figure 1 selon une variante de réalisation ;
- la figure 2 illustre une représentation schématique en coupe longitudinale d'un dispositif d'injection selon un autre mode de réalisation de l'invention ;
- les figures 2a, 2b et 2c sont des vues en coupe selon les lignes CC, DD, EE respectivement de la figure 2 ;
- les figures 2d, 2e et 2f sont des vues en coupe similaires à celles de la figure 2a selon d'autres modes de réalisation ;
- la figure 3 représente partiellement une coupe longitudinale d'un dispositif d'injection selon une autre variante ;
- la figure 4 représente partiellement en perspective la paroi interne ouverte d'un dispositif d'injection selon une autre variante ;
- la figure 5 représente une vue de plusieurs chicanes suivant l'axe longitudinal X selon une autre variante ;
- la figure 6 représente une vue suivant l'axe longitudinal X selon une autre variante d'une seule et même chicane, ainsi que les vues en coupe suivant deux directions distinctes A'A et B'B perpendiculaires à la direction longitudinale ;
- les figures 7 et 8 représentent partiellement des vues en coupe longitudinale de chicanes présentant des bords libres de formes différentes ;
- les figures 9 et 10 représentent partiellement des coupes longitudinales d'un dispositif d'injection selon d'autres variantes.

Sur les différentes figures, les éléments identiques portent les mêmes références.

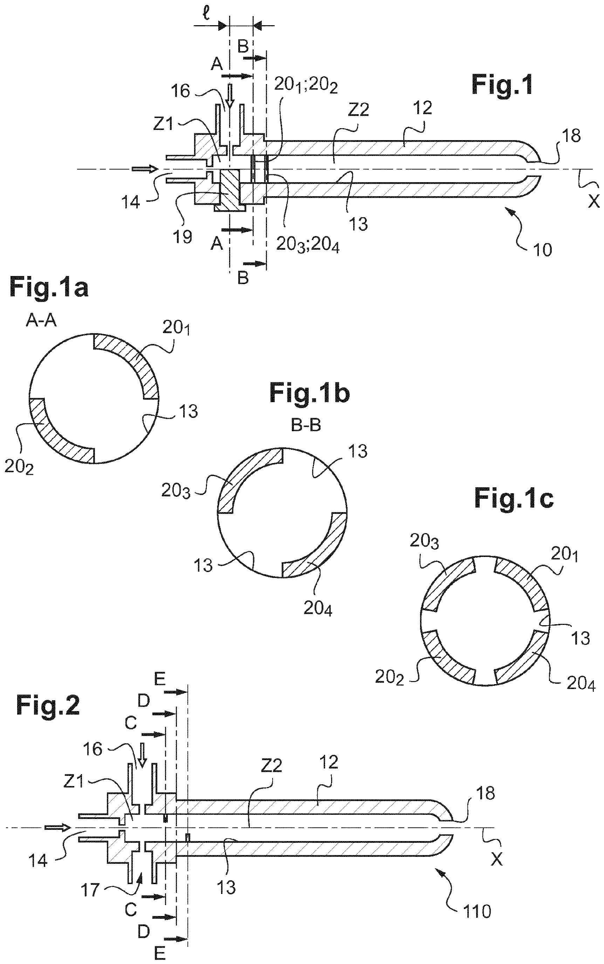

La figure 1 représente schématiquement un injecteur 10 lequel présente un corps tubulaire creux 12, ici essentiellement cylindrique, lequel s'étend suivant une direction longitudinale X.

Le corps 12 comporte une paroi interne 13 laquelle définit une première zone Z1 dite de contact et une deuxième zone Z2 située en aval de la première zone Z1 par rapport à un sens de circulation du liquide et du gaz à l'intérieur du corps (ici de gauche à droite sur la figure).

Ce corps creux 12 présente en outre :
- une première ouverture 14 d'entrée de gaz, destinée à être raccordée à un conduit d'alimentation d'un gaz,
- une deuxième ouverture 16 d'entrée de liquide, destinée à être raccordée à un conduit d'alimentation de liquide,
- un orifice de sortie 18 pour l'évacuation du liquide atomisé, situé en aval des zones Z1, Z2.

Les ouvertures 14 et 16 débouchent à l'intérieur de la première zone Z1, également appelée chambre de contact.

A l'intérieur du corps 12, les fluides circulent des ouvertures d'entrée 14, 16 vers l'orifice de sortie 18.

L'injecteur 10 représenté sur la figure 1 est communément appelé de type à « impact».

Ici, la première zone Z1 et la deuxième zone Z2 se présentent sous la forme d'une conduite interne rectiligne reliant la première ouverture d'entrée 14 à l'orifice de sortie 18 suivant une direction axiale dudit corps. Cette conduite interne présente un diamètre interne sensiblement constant. Autrement dit, la paroi interne 13 est ici cylindrique, d'axe confondu avec la direction longitudinale X du corps. L'invention n'est toutefois pas limitée par ce mode de réalisation. La section interne de cette conduite (autrement dit du corps) pourrait varier de manière continue ou être constante sur toute la longueur de la conduite (i.e. du corps), sans toutefois être circulaire.

Le dispositif d'injection 10 comprend en outre une cible 19 s'étendant en saillie de la paroi interne 13 dans la première zone Zl, en regard de l'ouverture 16 d'introduction du liquide et au travers du passage du gaz entrant par l'ouverture 14.

Le liquide est projeté contre la cible 19 dès son entrée dans la première zone Z1 par l'ouverture 16. Le jet de liquide éclate et est emporté sous forme de gouttelettes par un courant de gaz d'atomisation introduit par l'ouverture 14 à haute vitesse. L'atomisation du liquide dans ce type d'injecteur 10 s'effectue en deux fois. Une première partie de l'atomisation se produit au niveau de la cible 19 par un éclat du jet de liquide. La deuxième partie de l'atomisation se produit au niveau de l'orifice de sortie 18 de diamètre réduit, où le rétrécissement du diamètre accélère les fluides.

Selon l'invention, la paroi interne 13 du corps est pourvue entre la première zone Z1 et la deuxième zone Z2, d'au moins une chicane 20ᵢ (où i, le nombre de chicanes, est un nombre entier non nul) conformée de sorte que, dans chaque plan perpendiculaire à la direction longitudinale X du corps contenant cette chicane, celle-ci s'étend sur une partie seulement de la périphérie de la paroi interne. Cette chicane réduisant localement le diamètre de la paroi interne 13, perturbe le mouvement du fluide, favorisant le mélange. Notamment, la présence de chicane permet d'éviter la formation d'un film de liquide sur la paroi en ramenant le liquide dans l'axe du flux de gaz.

Dans l'exemple de la figure 1, quatre chicanes 20₁, 20₂, 20₃, 20₄ disjointes sont prévues.

On notera ici que chaque chicane 20₁, 20₂, 20₃, 20₄ est conformée de sorte que le projeté orthogonal de la chicane sur un plan perpendiculaire à la direction longitudinale du corps s'étend sur une partie seulement de la périphérie de la paroi interne dans ledit plan de projection (voir figures 1a, 1b).

Deux chicanes 20₁, 20₂ s'étendent dans un même plan perpendiculaire à la direction longitudinale X, les deux autres chicanes 20₃, 20₄ s'étendant dans un autre plan perpendiculaire, espacé du plan des chicanes suivant la direction longitudinale X.

Les chicanes 20₁, 20₂, 20₃, 20₄ sont en outre décalées angulairement par rotation autour de la direction longitudinale X, tel que visible sur les figures 1a et 1b. On notera que ces chicanes sont en quinconce, leur projeté orthogonal sur un plan perpendiculaire à la direction longitudinale du corps s'étendant sur toute la périphérie de la paroi interne 13.

En variante, on pourrait prévoir que le projeté orthogonal de ces chicanes sur un plan perpendiculaire à la direction X ne s'étende pas sur la totalité de la périphérie de la paroi interne 13, mais sur une partie seulement, tel que représenté sur la figure 1c.

Dans une autre variante non représentée, on pourrait prévoir que le projeté orthogonal des chicanes sur un plan perpendiculaire à la direction X s'étende sur la totalité de la périphérie de la paroi interne 13, avec un recouvrement entre les projections des chicanes.

Ainsi, l'agencement relatif des chicanes peut être choisi de manière à perturber le plus possible le mouvement du fluide circulant à l'intérieur du dispositif d'injection, sans augmenter la perte de charge.

Dans l'exemple représenté figure 1, les chicanes se présentent sous la forme de parois planes perpendiculaires à la direction longitudinale X. Autrement dit, un bord de la paroi de chaque chicane est ainsi solidarisé à la paroi interne 13 le long d'une ligne s'étendant dans un plan perpendiculaire à la direction longitudinale dudit corps.

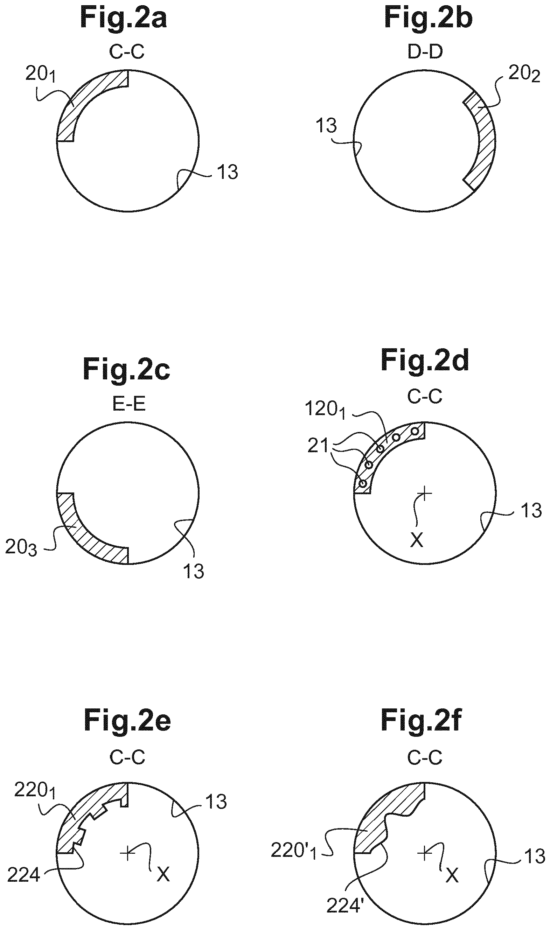

La figure 2 représente un dispositif d'injection 10 qui ne diffère de du mode de réalisation représenté figure 1 que par le fait que la cible 19 est remplacée par une ouverture 17 destinée à être raccordée à une conduite de liquide.

Ce dispositif d'injection 10 est également du type à « impact », mais le jet de liquide n'impacte pas sur une cible mais sur un autre jet de liquide. Ainsi, les ouvertures 16 et 17 sont disposées en regard l'une de l'autre, perpendiculairement à la direction longitudinale X, de sorte que les jets de liquide en sortant s'impactent à l'intérieur de la première zone Z1, sensiblement en regard de l'ouverture d'entrée du gaz 14. On pourrait également envisager une configuration des ouvertures telle que décrite dans le document FR 3 020 578 A1.

Les figures 2 à 10 représentent d'autres modes de réalisation qui diffèrent de ceux précédemment décrits par le nombre et/ou la forme des chicanes. Sur ces figures, les chicanes sont désignées par la référence « 20 » ou « J20i », l'indice « i », nombre entier non nul, représentant le nombre de chicanes, les signes prime ('), double prime ("), triple prime ('") et quadruple prime ("") désignant des modes de réalisation différents de ceux précédemment décrits, d'autres modes de réalisation différents étant signalés par J (nombre entier de 1 à 5 dans les exemples).

Dans le mode de réalisation de la figure 2, le dispositif d'injection 10 est équipé ici de trois chicanes 20₁, 20₂, 20₃ espacées suivant la direction longitudinale X et décalées angulairement (voir figures 2a, 2b, 2c).

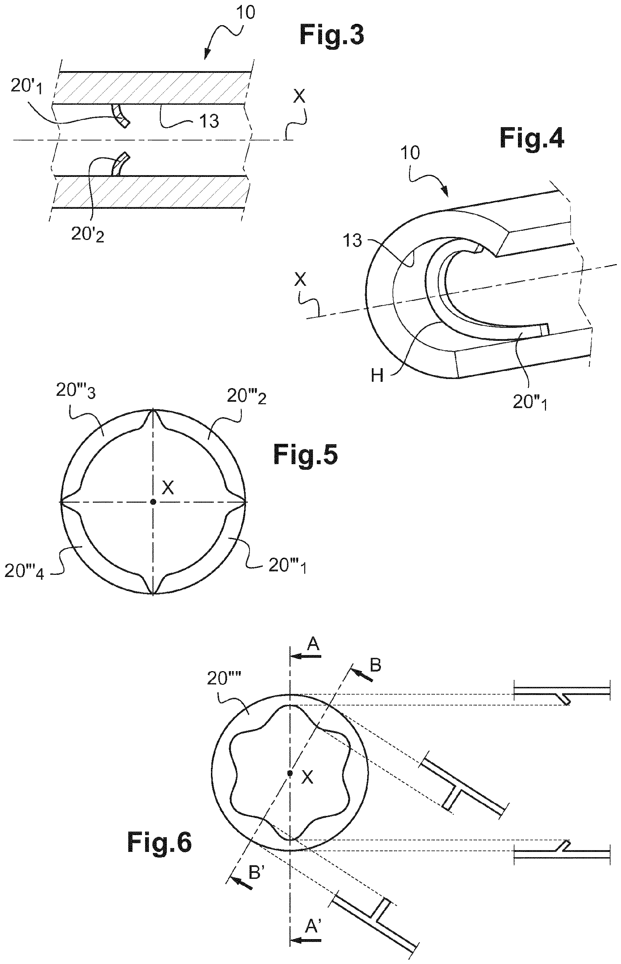

Les chicanes représentées figures 1 et 2 définissent des parois planes perpendiculaires à la direction longitudinale X. Ces parois pourraient également être incurvées. Ainsi, la figure 3 représente partiellement en coupe axiale le dispositif d'injection 10 pourvu de chicanes 20'₁, 20'₂ incurvées, notamment en direction de l'axe central longitudinal du corps 12. Ici, la concavité de ces chicanes est orientée vers l'orifice de sortie 18. On pourrait néanmoins prévoir qu'elle soit orientée dans la direction opposée.

Dans ce mode de réalisation, chaque chicane 20'₁, 20'₂ définit une paroi dont un bord est solidarisé à la paroi interne 13 le long d'une ligne s'étendant dans un plan perpendiculaire à la direction longitudinale X. Bien que non représentées, d'autres chicanes 20'ᵢ espacées suivant X et/ou décalées angulairement pourraient être prévues.

La figure 4 représente partiellement en perspective la paroi 13 d'un dispositif d'injection 10 comprenant une chicane 20"₁ qui définit une paroi dont un bord est solidarisé à la paroi interne 13 le long d'un segment d'une courbe hélicoïdale H. La chicane 20"₁ peut définir une paroi plane ou incurvée, comme représenté figure 1c. Dans l'exemple, le segment de courbe hélicoïdale ne fait pas tout le tour du corps. On pourrait néanmoins prévoir qu'il en fasse le tour, voire plus d'une fois le tour.

Une ou plusieurs chicanes 20"ᵢ peuvent être prévues, par exemple décalées angulairement et/ou espacées selon la direction longitudinale X. En outre, elles peuvent être agencées les unes par rapport aux autres afin d'impartir au fluide impactant sur leur face incurvée un même mouvement de rotation autour d'un axe parallèle à la direction longitudinale du corps.

D'autres modes de réalisation sont décrits en référence aux figures 2d, 2e, 2f. Ils concernent des chicane perforées 120ᵢ ou présentant un bord libre ondulé ou crénelé (220ᵢ, 220'ᵢ).

La figure 2d est une vue en coupe d'une chicane 120₁ perforée. Des orifices 21 la traversent de part en part, permettant le passage du fluide. Autrement dit, les orifices s'étendent dans une direction parallèle ou sensiblement parallèle (avec un écart allant jusqu'à 20°) à l'axe du corps 12. Cet agencement permet d'améliorer la dispersion du fluide en aval de la chicane, perturbe moins l'écoulement du fluide, tout en recentrant celui-ci vers l'axe du corps 12.

Les figures 2e et 2f sont des vues en coupe d'une chicane selon un autre mode de réalisation, dans lequel la chicane 220₁, 220'₁ présente un bord libre 224, 224' respectivement, distant de la paroi interne 13, qui est soit dentelé (chicane 220₁), soit crénelé (chicane 220'₁). Ces agencements ont un effet similaire que celui de la figure 2d.

Les figures 2d-2f décrivent des variantes de réalisation de la chicane 20₁ des figures 2 et 2a. Les différentes chicanes représentées figures 1 et 2 pourraient présenter des formes similaires. On peut aussi envisager de combiner des chicanes de différentes formes.

Les chicanes précédemment décrites peuvent être réalisées d'une pièce avec le corps 12, par exemple par moulage ou usinage, ou être des éléments rapportés fixés, par exemple soudés, maintenus entre des brides, ou autre. Lorsque plusieurs chicanes sont présentes, elles peuvent être identiques ou différentes, les différentes formes et dispositions de chicanes précédemment décrites pouvant être combinées.

La ou les chicanes sont disposées entre les première et deuxième zones Z1, Z2. Typiquement, la deuxième zone a une longueur (suivant la direction longitudinale X) de 2 à 10 fois supérieure à la longueur de la première zone. La ou les chicanes, notamment la première chicane, peuvent être situées à une distance « 1 » de l'axe de la cible 19 ou des ouvertures 16, 17 inférieure au diamètre de la paroi interne 13, au niveau de la première zone, par exemple à une distance correspondant à ¾ de ce diamètre (pour des raisons de clarté, l'échelle n'est pas respectée sur les figures).

La ou les chicanes peuvent présenter une dimension radiale ou hauteur (perpendiculairement à la direction longitudinale X) non nulle relativement faible, par exemple inférieure à 1/8^{ème} du diamètre de la paroi interne 13, voire de l'ordre de 1/10^{ème} de ce diamètre. Cette hauteur peut être variable le long de la longueur d'une chicane, tel que représenté sur la figure 5, sur laquelle quatre chicanes 20'''₁, 20'''₂, 20'''₃, 20'''₄ sont représentées, dont la hauteur varie au niveau des extrémités ou encore sur les figures 2e-2f.

L'épaisseur de chaque chicane, mesurée suivant la direction longitudinale X du corps, non nulle, est par exemple d'au plus 16 à 35mm.

On notera que quelque soit sa forme (incurvée ou plane), une chicane (ou sa tangente en son point de jonction avec la paroi interne 13 du corps) peut définir un angle prédéterminé par rapport à un plan orthogonal à la direction longitudinale du corps (voir fig.3, 6, 7(b) et 8(a)). Cet angle peut être variable pour une même chicane 20"", tel que visible sur la figure 6.

La ou les chicanes ainsi inclinées peuvent être inclinées en direction de l'orifice de sortie 18.

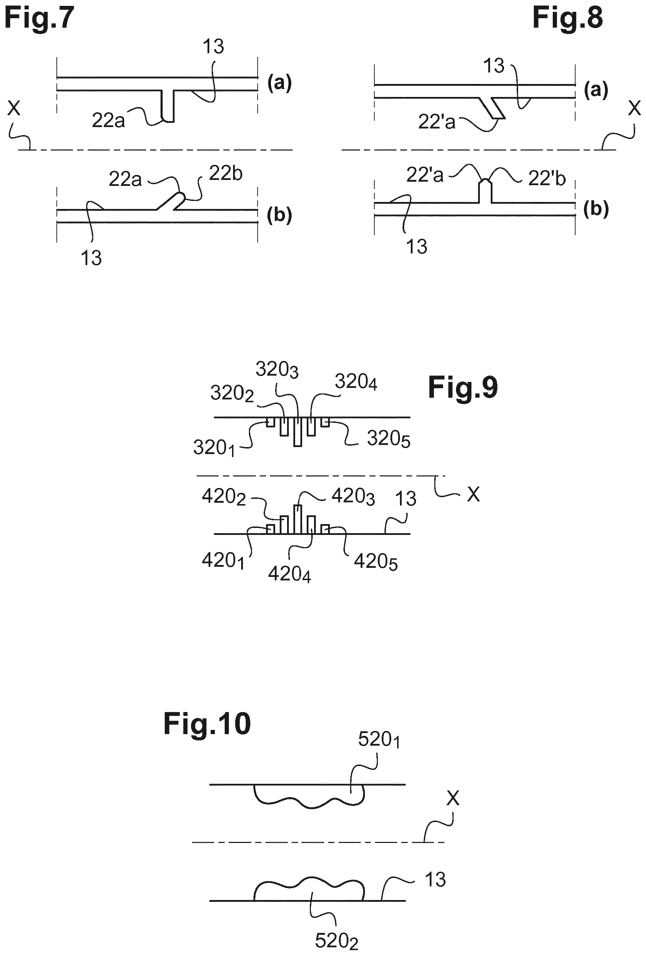

Quelle que soit sa forme (incurvée ou plane), le bord libre d'une chicane (opposé à son bord solidaire de la paroi interne du corps) peut présenter une face 22a de forme arrondie (fig. 7(a)), une face 22'a en biseau (fig.7(b)), deux faces 22a, 22b de formes arrondies (fig.8(a)) ou deux faces 22'a, 22'b en biseau (fig.8(b)).

Lorsqu'une seule face est prévue, elle peut être située du côté de la zone de mélange Z1 suivant la direction longitudinale X, tel que représenté.

Le mode de réalisation de la figure 9 montre deux groupes de 5 chicanes adjacentes chacun (320₁, 320₂, 320₂, 320₄, 320₅), (420₁, 420₂, 420₂, 420₄, 420₅) espacées suivant la direction longitudinale X du corps 12. On notera que chaque chicane présente une hauteur constante (comme dans l'exemple de la figure 2a), mais que les chicanes adjacentes d'un groupe présentent des hauteurs différentes. Dans l'exemple, les hauteurs des chicanes de chaque groupe sont croissantes jusqu'à atteindre un maximum et à décroitre. Bien entendu, le nombre de chicanes adjacentes dans chaque groupe pourrait être différent et pourrait être supérieur ou inférieur à 5. En outre, les deux groupes de chicanes sont disposées symétriquement par rapport à l'axe X, mais d'autres configurations sont envisageables.

Tel que déjà mentionné, l'épaisseur (ou longueur) des chicanes précédemment décrite est par exemple d'au plus 16 à 35mm.

On notera que la ou les chicanes décrites en référence aux figures 1, 1a-1c, 2, 2a-2f, et 3 à 8 définissent une paroi (plane ou non) dont la dimension suivant la direction longitudinale X est inférieure à la dimension suivant une direction perpendiculaire à la direction longitudinale.

Dans le mode de réalisation de la figure 10, la chicane ne définit plus une paroi dans la mesure où sa longueur (suivant la direction longitudinale X) est supérieure à sa dimension perpendiculairement à la direction longitudinale X. La paroi interne 13 représentée figure 10 est ainsi pourvue de deux chicanes « longues » 520₁, 520₂ (ici en vis-à-vis) s'étendant sur une longueur, suivant la direction longitudinale, au moins égale à une dimension interne maximale du corps mesurée perpendiculairement à la direction longitudinale, autrement dit, au diamètre interne du corps dans cet exemple. On notera en outre que chaque chicane 520₁, 520₂ présente un profil irrégulier suivant la direction longitudinale du corps. Ainsi, leur hauteur est variable suivant la direction X. la forme de ce profil peut être adaptée : il peut être similaire au profil général de chaque groupe de 5 chicanes de la figure 9 ou former des ondulations, tel que représenté sur la figure 10. En outre, la hauteur d'une chicane pourrait également être variable dans chaque section transversale de la chicane. Plus de deux chicanes longues espacées angulairement pourraient être prévues, s'étendant suivant une direction hélicoïdale ou rectiligne, présentant une face incurvée ou non.

Les différents modes de réalisation précédemment décrits peuvent être combinés et mis en œuvre indifféremment pour une ou plusieurs chicanes.

## Revendications

1. Dispositif d'injection (10) conformé pour atomiser un liquide en gouttelettes au moyen d'un gaz, comprenant un corps tubulaire creux (12) s'étendant suivant une direction longitudinale (X) et dont une paroi interne (13) définit une première zone dite de contact (Z1) et une deuxième zone (Z2) située en aval de la première zone par rapport à un sens de circulation du liquide et du gaz à l'intérieur du corps, ce dernier présentant :
- au moins une première (16, 17) et une deuxième (14) ouverture d'entrée débouchant dans ladite première zone (Zl), pour injecter respectivement un liquide et un gaz d'atomisation à l'intérieur de la première zone,
- au moins un orifice de sortie (18) situé en aval des première et deuxième zones pour évacuer le liquide atomisé hors du corps,
**caractérisé en ce que** la paroi interne (13) du corps est pourvue, entre la première et la deuxième zone, d'au moins une chicane (20ᵢ, 20'ᵢ, 20"ᵢ, 120ᵢ, 220ᵢ, 220'ᵢ, 320ᵢ, 420ᵢ, 520ᵢ) contrariant le cheminement d'un fluide en mouvement conformée de sorte que, dans chaque plan perpendiculaire à la direction longitudinale du corps contenant ladite chicane, celle-ci s'étend sur une partie seulement de la périphérie de la paroi interne (13) de sorte que la perte de charge est inférieure à la perte de charge dans le cas où une chicane s'étend sur toute la périphérie de la paroi interne et **en ce que** la ou les chicanes (20ᵢ, 20'ᵢ, 20"ᵢ, 120ᵢ, 220ᵢ, 220'ᵢ, 320ᵢ, 420ᵢ, 520ᵢ) présentent une hauteur, mesurée perpendiculairement à la direction longitudinale du corps, non nulle, égale au moins à 1/10^{ème} et au plus à 1/4 de la dimension interne maximale du corps perpendiculairement à la direction longitudinale du corps et une dimension mesurée suivant la direction longitudinale du corps de 10 à 35mm ou au moins égale à une dimension interne maximale du corps mesurée perpendiculairement à la direction longitudinale.

2. Dispositif d'injection (10) selon la revendication 1, **caractérisé en ce que** ladite au moins une chicane (20ᵢ, 20'ᵢ, 20"ᵢ, 120ᵢ, 220ᵢ, 220'ᵢ, 320ᵢ, 420ᵢ, 520ᵢ) est conformée de sorte que le projeté orthogonal de la chicane sur un plan perpendiculaire à la direction longitudinale du corps s'étend sur une partie seulement de la périphérie de la paroi interne (13) dans ledit plan de projection.

3. Dispositif d'injection (10) selon la revendication 1, **caractérisé en ce que** ladite au moins une chicane (20ᵢ, 20'ᵢ, 20"ᵢ, 120ᵢ, 220ᵢ, 220'ᵢ) est conformée de sorte que le projeté orthogonal de la chicane sur un plan perpendiculaire à la direction longitudinale du corps s'étend sur toute la périphérie de la paroi interne (13) dans ledit plan de projection.

4. Dispositif d'injection (10) selon l'une quelconque des revendications 1 ou 2, **caractérisé en ce que** ladite au moins une chicane (520ᵢ) s'étend sur une longueur, suivant la direction longitudinale, au moins égale à une dimension interne maximale du corps mesurée perpendiculairement à la direction longitudinale, et ladite chicane (520ᵢ) présente un profil irrégulier suivant la direction longitudinale du corps.

5. Dispositif d'injection (10) selon l'une quelconque des revendications 1 à 4, **caractérisé en ce que** ladite paroi interne (13) est pourvue d'une pluralité de chicanes disjointes.

6. Dispositif d'injection (10) selon la revendication 5, **caractérisé en ce qu'**au moins une chicane (20ᵢ, 320ᵢ, 420ᵢ), présentant une dimension mesurée suivant la direction longitudinale du corps de 10 à 35mm, est espacée d'au moins une autre chicane suivant la direction longitudinale du corps.

7. Dispositif d'injection (10) selon l'une quelconque des revendications 5 ou 6, **caractérisé en ce que** chaque chicane (20ᵢ, 20'ᵢ, 120ᵢ, 220ᵢ, 220'ᵢ, 320ᵢ, 420ᵢ, 520ᵢ) est décalée angulairement par rapport aux autres chicanes par rotation autour d'un axe parallèle à, ou confondu avec, ladite direction longitudinale (X).

8. Dispositif d'injection (10) selon la revendication 7, **caractérisé en ce que** le projeté orthogonal des chicanes (20ᵢ) sur un plan perpendiculaire à la direction longitudinale du corps s'étend sur toute la périphérie de la paroi interne, avec un recouvrement ou une juxtaposition des projections.

9. Dispositif d'injection (10) selon l'une quelconque des revendications 5 à 8, **caractérisé en ce que** plusieurs chicanes adjacentes (320ᵢ, 420ᵢ) présentant une dimension mesurée suivant la direction longitudinale du corps de 10 à 35mm, présentent des hauteurs, mesurées perpendiculairement à la direction longitudinale du corps, non nulles et différentes.

10. Dispositif d'injection (10) selon la revendication 9, **caractérisé en ce que**, suivant la direction longitudinale du corps, les hauteurs de chicanes adjacentes (320ᵢ, 420ᵢ) sont croissantes jusqu'à atteindre un maximum et à décroitre.

11. Dispositif d'injection (10) selon l'une quelconque des revendications 1 à 10, **caractérisé en ce que** la ou les chicanes (20ᵢ, 20'ᵢ, 20"ᵢ, 120ᵢ, 220ᵢ, 220'ᵢ, 320ᵢ, 420ᵢ, 520ᵢ) présentent une hauteur, mesurée perpendiculairement à la direction longitudinale du corps, non nulle, égale au plus à 1/8^{ème} de la dimension interne maximale du corps perpendiculairement à la direction longitudinale du corps.

12. Dispositif d'injection (10) selon l'une quelconque des revendications 1 à 11, **caractérisé en ce que** ladite au moins une chicane (20""ᵢ, 120ᵢ, 220ᵢ, 220'ᵢ, 320ᵢ, 420ᵢ) présentant une dimension mesurée suivant la direction longitudinale du corps de 10 à 35mm, définit une paroi dont un bord est solidarisé à la paroi interne et **en ce que** la paroi définie par ladite au moins une chicane (120ᵢ, 220ᵢ, 220'ᵢ, 320ᵢ, 420ᵢ) présente au moins une des caractéristiques suivantes :
- un bord libre (224, 224') dentelé ou crénelé distant de la paroi interne,
- des orifices (21) la traversant de part en part.

13. Dispositif d'injection (10) selon l'une quelconque des revendications 1 à 3 et à 5 à 12, **caractérisé en ce que** ladite au moins une chicane (20ᵢ, 20'ᵢ, 20"ᵢ, 120ᵢ, 220ᵢ, 220'ᵢ, 320ᵢ, 420ᵢ) présentant une dimension mesurée suivant la direction longitudinale du corps de 10 à 35mm, définit une paroi dont un bord est solidarisé à la paroi interne :
le long d'une ligne s'étendant dans un plan perpendiculaire à la direction longitudinale dudit corps, ou
le long d'un segment d'une courbe, notamment d'une courbe hélicoïdale.

14. Dispositif d'injection (10) selon l'une quelconque des revendications 1 à 13, **caractérisé en ce que** ladite au moins une chicane (20'ᵢ) présente, du côté des ouvertures d'entrée, une face incurvée agencée pour diriger un fluide impactant la face vers l'intérieur du corps.

15. Dispositif d'injection (10) selon la revendication 14, **caractérisé en ce que** plusieurs chicanes présentant une face incurvée sont agencées les unes par rapport aux autres afin d'impartir au fluide impactant sur leur face incurvée un même mouvement de rotation autour d'un axe parallèle à la direction longitudinale du corps.

16. Dispositif d'injection (10) selon l'une quelconque des revendications 1 à 15, **caractérisé en ce qu'**il comprend une cible (19) s'étendant perpendiculairement à la direction longitudinale du corps, en regard d'une unique ouverture d'entrée (16) de liquide d'axe perpendiculaire à la direction longitudinale (X).

17. Dispositif d'injection (10) selon l'une quelconque des revendications 1 à 15, **caractérisé en ce qu'**il comprend deux ouvertures d'entrée de liquide (16, 17) s'étendant perpendiculairement à la direction longitudinale du corps et situées en regard l'une de l'autre.

## Patentansprüche

1. Injektionsvorrichtung (10), die so ausgebildet ist, dass sie eine Flüssigkeit mittels eines Gases in Tröpfchen zerstäubt, die einen hohlen rohrförmigen Körper (12) umfasst, der sich entsprechend einer Längsrichtung (X) erstreckt, und wovon eine Innenwand (13) eine erste sogenannte Kontaktzone (Z1) und eine zweite Zone (Z2) definiert, die stromabwärts der ersten Zone im Verhältnis zu einer Zirkulationsrichtung der Flüssigkeit und des Gases im Inneren des Körpers angeordnet ist, wobei dieser letztere aufweist:
- mindestens eine erste (16, 17) und eine zweite (14) Eintrittsöffnung, die in die genannte erste Zone (Z1) mündet, um jeweils eine Flüssigkeit und ein Zerstäubungsgas in das Innere der ersten Zone zu injizieren,
- mindestens eine Austrittsöffnung (18), die stromabwärts der ersten und zweiten Zone angeordnet ist, um die zerstäubte Flüssigkeit aus dem Körper austreten zu lassen,
**dadurch gekennzeichnet, dass** die Innenwand (13) des Körpers zwischen der ersten und der zweiten Zone mit mindestens einem Leitblech (20ᵢ, 20'ᵢ, 20"ᵢ, 120ᵢ, 220ᵢ, 220'ᵢ, 320ᵢ, 420ᵢ, 520ᵢ) versehen ist, das den Weg eines sich bewegenden Fluids erschwert, das so ausgebildet ist, dass es sich in jeder Ebene senkrecht zur Längsrichtung des Körpers, der das genannte Leitblech enthält, nur über einen Teil des Umfangs der Innenwand (13) erstreckt, sodass der Druckabfall geringer ist als der Druckabfall in dem Fall, in dem sich ein Leitblech über den gesamten Umfang der Innenwand erstreckt, und in dem das oder die Leitbleche (20ᵢ, 20'ᵢ, 20"ᵢ, 120ᵢ, 220ᵢ, 220'ᵢ, 320ᵢ, 420ᵢ, 520ᵢ) eine Höhe aufweisen, senkrecht zur Längsrichtung des Körpers gemessen, von ungleich Null, mindestens gleich 1/10 und höchstens 1/4 der maximalen Innenabmessung des Körpers senkrecht zur Längsrichtung des Körpers, und eine Abmessung, die entsprechend der Längsrichtung des Körpers von 10 bis 35 mm oder mindestens gleich einer maximalen Innenabmessung des Körpers, gemessen senkrecht zur Längsrichtung, gemessen ist.

2. Injektionsvorrichtung (10) nach Anspruch 1, **dadurch gekennzeichnet, dass** das genannte mindestens eine Leitblech (20ᵢ, 20'ᵢ, 20"ᵢ, 120ᵢ, 220ᵢ, 220'ᵢ, 320ᵢ, 420ᵢ, 520ᵢ) so ausgebildet ist, dass sich die orthogonale Projektion des Leitblechs auf einer Ebene senkrecht zur Längsrichtung des Körpers nur über einen Teil des Umfangs der Innenwand (13) in der genannten Projektionsebene erstreckt.

3. Injektionsvorrichtung (10) nach Anspruch 1, **dadurch gekennzeichnet, dass** das genannte mindestens eine Leitblech (20ᵢ, 20'ᵢ, 20"ᵢ, 120ᵢ, 220ᵢ, 220'ᵢ) so ausgebildet ist, dass sich die orthogonale Projektion des Leitblechs auf einer Ebene senkrecht zur Längsrichtung des Körpers über den gesamten Umfang der Innenwand (13) in der genannten Projektionsebene erstreckt.

4. Injektionsvorrichtung (10) nach einem der Ansprüche 1 oder 2, **dadurch gekennzeichnet, dass** sich das genannte mindestens eine Leitblech (520ᵢ) über eine Länge entsprechend der Längsrichtung erstreckt, die mindestens gleich einer maximalen Innenabmessung des Körpers, gemessen senkrecht zur Längsrichtung, ist, und das genannte Leitblech (520ᵢ) ein unregelmäßiges Profil entsprechend der Längsrichtung des Körpers aufweist.

5. Injektionsvorrichtung (10) nach einem der Ansprüche 1 bis 4, **dadurch gekennzeichnet, dass** die genannte Innenwand (13) mit einer Mehrzahl von getrennten Leitblechen versehen ist.

6. Injektionsvorrichtung (10) nach Anspruch 5, **dadurch gekennzeichnet, dass** das genannte mindestens eine Leitblech (20ᵢ, 320ᵢ, 420ᵢ), das eine entsprechend der Längsrichtung des Körpers gemessene Abmessung von 10 bis 35 mm aufweist, von mindestens einem anderen Leitblech entsprechend der Längsrichtung des Körpers beabstandet ist.

7. Injektionsvorrichtung (10) nach einem der Ansprüche 5 oder 6, **dadurch gekennzeichnet, dass** jedes Leitblech (20ᵢ, 20'ᵢ, 120ᵢ, 220ᵢ, 220'ᵢ, 320ᵢ, 420ᵢ, 520ᵢ) durch Drehung um eine Achse parallel im Verhältnis zu den anderen Leitblechen winkelversetzt ist, oder mit der genannten Längsrichtung (X) zusammenfällt.

8. Injektionsvorrichtung (10) nach Anspruch 7, **dadurch gekennzeichnet, dass** sich die orthogonale Projektion der Leitbleche (20ᵢ) auf einer Ebene senkrecht zur Längsrichtung des Körpers über den gesamten Umfang der Innenwand mit einer Überlappung oder Nebeneinanderstellung der Projektionen erstreckt.

9. Injektionsvorrichtung (10) nach einem der Ansprüche 5 bis 8, **dadurch gekennzeichnet, dass** mehrere benachbarte Leitbleche (320ᵢ, 420ᵢ), die eine entsprechend der Längsrichtung des Körpers gemessene Abmessung von 10 bis 35 mm aufweisen, Höhen, die senkrecht zur Längsrichtung des Körpers gemessen werden, ungleich Null und verschieden sind, aufweisen.

10. Injektionsvorrichtung (10) nach Anspruch 9, **dadurch gekennzeichnet, dass** entsprechend der Längsrichtung des Körpers die Höhen benachbarter Leitbleche (320ᵢ, 420ᵢ) zunehmen, bis sie ein Maximum erreichen und dann abnehmen.

11. Injektionsvorrichtung (10) nach einem der Ansprüche 1 bis 10, **dadurch gekennzeichnet, dass** das oder die Leitbleche (20ᵢ, 20'ᵢ, 20"ᵢ, 120ᵢ, 220ᵢ, 220'ᵢ, 320ᵢ, 420ᵢ, 520ᵢ) eine Höhe, senkrecht zur Längsrichtung des Körpers gemessen, von ungleich Null, höchstens gleich 1/8 der maximalen Innenabmessung des Körpers senkrecht zu einer Längsrichtung des Körpers aufweisen.

12. Injektionsvorrichtung (10) nach einem der Ansprüche 1 bis 11, **dadurch gekennzeichnet, dass** das genannte mindestens eine Leitblech (20''''ᵢ, 120ᵢ, 220ᵢ, 220'ᵢ, 320ᵢ, 420ᵢ), das eine entsprechend der Längsrichtung des Körpers gemessene Abmessung von 10 bis 35 mm aufweist, eine Wand definiert, deren einer Rand an der Innenwand befestigt ist, und dass die durch das genannte mindestens eine Leitblech (120ᵢ, 220ᵢ, 220'ᵢ, 320ᵢ, 420ᵢ) definierte Wand mindestens eine der folgenden Eigenschaften aufweist:
- einen freien Rand (224, 224'), gezahnt oder gekerbt, entfernt von der Innenwand,
- Durchgangsöffnungen (21), die diese von einer Seite zur anderen durchqueren.

13. Injektionsvorrichtung (10) nach einem der Ansprüche 1 bis 3 und 5 bis 12, **dadurch gekennzeichnet, dass** das genannte mindestens eine Leitblech (20ᵢ, 20'ᵢ, 20"ᵢ, 120ᵢ, 220ᵢ, 220'ᵢ, 320ᵢ, 420ᵢ), das eine entsprechend der Längsrichtung des Körpers gemessene Abmessung von 10 bis 35 mm aufweist, eine Wand definiert, deren einer Rand an der Innenwand befestigt ist:
entlang einer Linie, die sich in einer Ebene senkrecht zur Längsrichtung des genannten Körpers erstreckt, oder
entlang eines Kurvensegments an der Innenwand befestigt ist, insbesondere einer schraubenförmigen Kurve.

14. Injektionsvorrichtung (10) nach einem der Ansprüche 1 bis 13, **dadurch gekennzeichnet, dass** das genannte mindestens eine Leitblech (20'ᵢ) an der Seite der Einlassöffnungen eine gekrümmte Fläche aufweist, die angeordnet ist, um ein auf die Fläche aufprallendes Fluid in Richtung des Inneren des Körpers zu leiten.

15. Injektionsvorrichtung (10) nach Anspruch 14, **dadurch gekennzeichnet, dass** mehrere Leitbleche mit einer gekrümmten Fläche im Verhältnis zueinander angeordnet sind, um dem auf ihre gekrümmte Fläche aufprallenden Fluid die gleiche Drehbewegung um eine Achse parallel zur Längsrichtung des Körpers zu verleihen.

16. Injektionsvorrichtung (10) nach einem der Ansprüche 1 bis 15, **dadurch gekennzeichnet, dass** sie ein Ziel (19) umfasst, das sich senkrecht zur Längsrichtung des Körpers gegenüber einer einzigen Flüssigkeitseintrittsöffnung (16) mit einer Achse senkrecht zur Längsrichtung (X) erstreckt.

17. Injektionsvorrichtung (10) nach einem der Ansprüche 1 bis 15, **dadurch gekennzeichnet, dass** sie zwei Flüssigkeitseintrittsöffnungen (16, 17) umfasst, die sich senkrecht zur Längsrichtung des Körpers erstrecken und einander gegenüberliegend angeordnet sind.

## Claims

1. An injection device (10) configured to atomise a liquid into droplets by means of a gas, comprising a hollow tubular body (12) extending in a longitudinal direction (X) and of which an internal wall (13) defines a first so-called contact zone (Z1) and a second zone (Z2) located downstream of the first zone with respect to a direction of circulation of the liquid and the gas inside the body, the latter having:
- at least a first (16, 17) and a second (14) inlet, opening into said first zone (Z1), in order to inject a liquid and an atomising gas, respectively, into the first zone,
- at least one outlet (18) located downstream of the first and second zones for removing the atomised liquid from the body,
**characterised in that** the internal wall (13) of the body is provided, between the first and the second zone, with at least one baffle (20ᵢ, 20'ᵢ, 20"ᵢ, 120ᵢ, 220ᵢ, 220'ᵢ, 320ᵢ, 420ᵢ, 520ᵢ) interfering with the path of a moving fluid, shaped so that, in each plane perpendicular to the longitudinal direction of the body containing said baffle, the latter extends over only a part of the periphery of the internal wall (13) so that the pressure drop is less than the pressure drop in the case where a baffle extends over the entire periphery of the internal wall and **in that** the baffle or baffles (20ᵢ, 20'ᵢ, 20"ᵢ, 120ᵢ, 220ᵢ, 220'ᵢ, 320ᵢ, 420ᵢ, 520ᵢ) have a height, measured perpendicular to the longitudinal direction of the body, that is non-zero and equal to at least 1/10 and at most 1/4 of the maximum internal dimension of the body perpendicular to the longitudinal direction of the body and a dimension, measured in the longitudinal direction of the body, of 10 to 35 mm or at least equal to a maximum internal dimension of the body measured perpendicular to the longitudinal direction.

2. The injection device (10) according to claim 1, **characterised in that** said at least one baffle (20ᵢ, 20'ᵢ, 20"ᵢ, 120ᵢ, 220ᵢ, 220'ᵢ, 320ᵢ, 420ᵢ, 520ᵢ) is shaped so that the orthogonal projection of the baffle on a plane perpendicular to the longitudinal direction of the body extends over only a part of the periphery of the internal wall (13) in said projection plane.

3. The injection device (10) according to claim 1, **characterised in that** said at least one baffle (20ᵢ, 20'ᵢ, 20"ᵢ, 120ᵢ, 220ᵢ, 220'ᵢ) is shaped so that the orthogonal projection of the baffle on a plane perpendicular to the longitudinal direction of the body extends over the entire periphery of the internal wall (13) in said projection plane.

4. The injection device (10) according to any one of claims 1 or 2, **characterised in that** said at least one baffle (520ᵢ) extends over a length, in the longitudinal direction, at least equal to a maximum internal dimension of the body measured perpendicular to the longitudinal direction, and said baffle (520ᵢ) has an irregular profile in the longitudinal direction of the body.

5. The injection device (10) according to any one of claims 1 to 4, **characterised in that** said internal wall (13) is provided with a plurality of separate baffles.

6. The injection device (10) according to claim 5, **characterised in that** at least one baffle (20ᵢ, 320ᵢ, 420ᵢ), having a dimension measured in the longitudinal direction of the body of 10 to 35 mm, is spaced apart from at least one other baffle in the longitudinal direction of the body.

7. The injection device (10) according to any one of claims 5 or 6, **characterised in that** each baffle (20ᵢ, 20'ᵢ, 120ᵢ, 220ᵢ, 220'ᵢ, 320ᵢ, 420ᵢ, 520ᵢ) is angularly offset with respect to the other baffles by rotation about an axis parallel to, or coincident with, said longitudinal direction (X).

8. The injection device (10) according to claim 7, **characterised in that** the orthogonal projection of the baffles (20ᵢ) on a plane perpendicular to the longitudinal direction of the body extends over the entire periphery of the internal wall, with an overlap or a juxtaposition of the projections.

9. The injection device (10) according to any one of claims 5 to 8, **characterised in that** a plurality of adjacent baffles (320ᵢ, 420ᵢ), having a dimension measured in the longitudinal direction of the body of 10 to 35 mm, have heights, measured perpendicular to the longitudinal direction of the body, that are non-zero and different.

10. The injection device (10) according to claim 9, **characterised in that**, along the longitudinal direction of the body, the heights of adjacent baffles (320ᵢ, 420ᵢ) increase until they reach a maximum and then decrease.

11. The injection device (10) according to any one of claims 1 to 10, **characterised in that** the baffle or baffles (20ᵢ, 20'ᵢ, 20"ᵢ, 120ᵢ, 220ᵢ, 220'ᵢ, 320ᵢ, 420ᵢ, 520ᵢ) have a height, measured perpendicular to the longitudinal direction of the body, that is non-zero and equal to at most 1/8 of the maximum internal dimension of the body perpendicular to the longitudinal direction of the body.

12. The injection device (10) according to any one of claims 1 to 11, **characterised in that** said at least one baffle (20''''ᵢ, 120ᵢ, 220ᵢ, 220'ᵢ, 320ᵢ, 420ᵢ) having a dimension measured along the longitudinal direction of the body of 10 to 35 mm, defines a wall, one edge of which is secured to the internal wall and **in that** the wall defined by said at least one baffle (120ᵢ, 220ᵢ, 220'ᵢ, 320ᵢ, 420ᵢ) has at least one of the following features:
- a serrated or crenellated free edge (224, 224'), away from the internal wall,
- openings (21) passing all the way through it.

13. The injection device (10) according to any one of claims 1 to 3 and 5 to 12, **characterised in that** said at least one baffle (20ᵢ, 20'ᵢ, 20"ᵢ, 120ᵢ, 220ᵢ, 220'ᵢ, 320ᵢ, 420ᵢ), having a dimension measured along the longitudinal direction of the body of 10 to 35 mm, defines a wall, one edge of which is secured to the internal wall:
along a line extending in a plane perpendicular to the longitudinal direction of said body, or
along a segment of a curve, in particular a helical curve.

14. The injection device (10) according to any one of claims 1 to 13, **characterised in that** said at least one baffle (20'ᵢ) has, on the side of the inlets, a curved face arranged to direct a fluid striking the face towards the inside of the body.

15. The injection device (10) according to claim 14, **characterised in that** a plurality of baffles having a curved face are arranged relative to one another in order to impart, to the fluid striking their curved face, a single rotational movement about an axis parallel to the longitudinal direction of the body.

16. The injection device (10) according to any one of claims 1 to 15, **characterised in that** it comprises a target (19) extending perpendicular to the longitudinal direction of the body, facing a single liquid inlet (16) with an axis perpendicular to the longitudinal direction (X).

17. The injection device (10) according to any one of claims 1 to 15, **characterised in that** it comprises two liquid inlets (16, 17) extending perpendicular to the longitudinal direction of the body and located facing one another.
